# EUROPÄISCHE PATENTANMELDUNG

(11) **EP 3 515 081 A1**
(43) Veröffentlichungstag der Anmeldung: **24.07.2019**
(21) Anmeldenummer: 19156481.4
(22) Anmeldetag: 09.01.2013
(51) Int. Cl.: H04N 21/214, H04N 21/258, H04N 21/414, H04N 21/426, B64D 11/00, H04H 20/62, H04W 84/00

(54) **VERFAHREN ZUR AUSGABE VON NUTZERSPEZIFISCHEN INFORMATIONSINHALTEN IN EINEM BEFÖRDERUNGSMITTEL**

(30) Priorität: 07.02.2012 DE 102012201786
(62) Teilanmeldung aus: 13700633.4
(71) Anmelder: Atos Convergence Creators GmbH, 1210 Wien (AT)
(72) Erfinder: SCHREIBER, Gerald, 21465 WENTORF (DE)
(74) Vertreter: Novagraaf Technologies

(57) **Zusammenfassung**

Die Erfindung betrifft ein Verfahren zur Ausgabe von nutzerspezifischen Informationsinhalten in einem Beförderungsmittel, insbesondere einem Flugzeug. Im Beförderungsmittel ist dazu ein Informationssystem (IS) vorgesehen sowie ein Zugangspunkt (AP), über welchen eine drahtlose Verbindung von im Beförderungsmittel befindlichen mobilen Endgeräten (AE) wie z.B. Mobiltelefonen, Laptop-PCs, Tablet-PCs, etc. von Nutzern des Beförderungsmittels zum Informationssystem (IS) aufgebaut werden kann (1). Ein mobiles Endgerät (AE), von welchem eine Verbindung zum Informationssystem (IS) aufgebaut wird, wird über eine eindeutige Kennung am Informationssystem (IS) identifiziert und registriert (2). Dann wird ein nutzerspezifischer Buchungsdatensatz (BC) - wie z.B. ein Barcode auf einem Ticket, Boarding-Pass, etc. - mit dem mobilen Endgerät (AE) erfasst (3), ausgewertet und an das Informationssystem (IS) übertragen (4). Vom Informationssystem (IS) wird dann eine Verknüpfung zwischen dem nutzerspezifischen Buchungsdatensatz (BC) und der eindeutigen Kennung des mobilen Endgeräts (AE) hergestellt (5) und diese Verknüpfung, welche in einer zum Informationssystem (IS) gehörenden Datenbank (DB) abgespeichert werden kann (6), dann zur Steuerung der Ausgabe der nutzerspezifischen Informationsinhalten eingesetzt werden. Einem Passagier in einem Beförderungsmittel können damit auf einfache Weise z.B. auf seinem mobilen Endgerät (AE) alters- und/oder personenspezifische Inhalte (z.B. Filme, Werbung, etc.) angeboten werden und zusätzlich können Ressourcen wie z.B. Bandbreite bei einer Datenübertragung besser genutzt werden.

## Beschreibung

### Technisches Gebiet

Die vorliegende Erfindung betrifft ein Verfahren zur Ausgabe von nutzerspezifischen Informationsinhalten in einem Beförderungsmittel, insbesondere einem Flugzeug. Im Beförderungsmittel sind ein Informationssystem sowie ein Zugangspunkt zum Informationssystem für mobile Endgeräte wie z.B. Mobiltelefone, Laptop-PCs, Tablet-PCs, etc. vorgesehen, welche von Benutzern des Beförderungsmittels mitgebracht werden und beispielsweise als Ausgabeeinheit für die Informationsinhalte verwendet werden können. Dabei kann von einem im Beförderungsmittel befindlichen mobilen Endgerät eine meist drahtlose Verbindung über den Zugangspunkt zum Informationssystem aufgebaut werden.

### Stand der Technik

In Beförderungsmittel für Personen, wie z.B. Flugzeugen oder auch Schiffen, Zügen und Bussen, sind heutzutage oft Informationssysteme vorgesehen, von welchen beispielsweise Daten für Informationszwecke und/oder zur Unterhaltung auf Ausgabeeinheiten (z.B. fix im Beförderungsmittel angebrachte Endgeräte, mobile nutzerspezifische Endgeräte, etc.) übertragen können. Unter Informationssystemen werden in der Folge auch Unterhaltungssysteme verstanden. Über derartige Informationssysteme werden Passagiere während der Nutzung des jeweiligen Beförderungsmittels (z.B. Flugzeug, Schiff, Zug, etc.) beispielsweise mit Informationsangeboten und/oder Unterhaltungsprogrammen versorgt.

In Flugzeugen werden z.B. zum Übertragen von Informationsinhalten (z.B. Audiostreams, Videostreams, Fluginformationen, etc.) zu den Passagieren als Informationssysteme so genannte In-Flight-Entertainment- oder Bordunterhaltungssysteme eingesetzt. Derartige Systeme haben sich in den letzten 25 Jahren stark weiterentwickelt. Anfangs bestehen diese Systeme nur aus Audiosystemen, über welche den Passagieren Audioinformationen und/oder Audiodaten (z.B. Musik) zur Verfügung gestellt wurden. Ab den 1980iger Jahren wurden die Systeme um Ausstrahlungen von Videoinformationen (z.B. VHS-Videobänder, welche über Gruppenbildschirme in der Flugzeugkabine zu sehen waren) erweitert. Seit den frühen 1990iger Jahren wurden die Informationssysteme zu so genannten In-Seat-Video-Systemen erweitert, bei welchen von einem Passagier z.B. Videofilme oder andere Informationen üblicherweise auf einem zum Sitzplatz gehörenden Bildschirm mittels einer Bedieneinrichtung ausgewählt werden konnten und diesem dann auf dem Bildschirm angezeigt wurde. Mittlerweile wurden derartige Informations- und Entertainmentsysteme beispielsweise um interaktive Spiele, so genannten Audio- und/oder Video-on-Demand, Real-time-Fluginformationen, etc. erweitert, welche einem Passagier für Unterhaltungs- und/oder Informationszwecke zur Verfügung gestellt werden können. Auch für andere Beförderungsmittel wie z.B. Schiffe, Züge, Busse, etc. gibt es bereits Ansätze und Überlegungen den Passagieren bzw. Fahrgästen Unterhaltungs- und/oder Informationssysteme anzubieten.

In Flugzeugen umfassen Informationssysteme üblicherweise eine zentrale Servereinheit, von welcher beispielsweise mit den Ausgabeeinheiten (z.B. Sitzplatzbildschirme, mobile Endgeräte von Passagieren, etc.) kommuniziert wird, Eingaben von Passagieren verarbeitet werden, und von welcher für eine Verteilung der Informationsinhalte gesorgt wird. Zusätzlich ist üblicherweise eine zum Informationssystem gehörende Datenbank vorgesehen, in welcher z.B. Informationsinhalte (z.B. Video- und/oder Audiodaten, etc.) zentral abgelegt sind, und gegebenenfalls andere Daten (z.B. Daten von Ausgabeeinheiten, etc.) gespeichert werden können.

Für die Verteilung der Informationsinhalte an die Ausgabeeinheiten und/oder für eine Kommunikationsverbindung der Ausgabeeinheiten bzw. mobilen Endgeräte der Passagiere mit dem Informationssystem kann ein Zugangspunkt - ein so genannter Access Point - vorgesehen sein, über welchen von den Ausgabeeinheiten eine drahtlose Verbindung zum Informationssystem aufgebaut werden kann. Dabei können beispielsweise proprietäre oder standardisierte Funksysteme z.B. auf Basis von Wireless LAN, Mobilfunkstandards (z.B. Global System for Mobile Communications (GSM), Universal Mobile Telecommunications System (UMTS), Next Generation Mobile Networks (NGMN) oder 4G, etc.) verwendet werden. Über einen derartigen Zugangspunkt kann insbesondere von Passagieren mit Endgeräten wie z.B. Mobiltelefone, Smartphones, Laptops und/oder Tablet-PCs eine Verbindung zum Informationssystem innerhalb des Beförderungsmittels aufgebaut und Informationsinhalte genutzt werden. Ähnlich Ansätze sind auch z.B. für Passagiere von Schiffen bzw. für Fahrgäste von Zügen oder Bussen denkbar.

Derzeit werden allerdings derartige Informationsangebote auf mobilen Endgeräten in Flugzeugen kostenlos zur Verfügung gestellt, wodurch ein Nutzer anonym bleibt und keine nutzerspezifische Anpassung der Informationsinhalte möglich ist. Bei kostenpflichtigen Informationsangeboten wird während eines Bezahlvorgangs üblicherweise eine Authentifizierung des Nutzers durchgeführt, allerdings kann auf die Authentifizierungsdaten des Nutzers häufig aus datenschutzrechtlichen Gründen für andere Zwecke als den Bezahlvorgang nicht zugegriffen werden. Für ein nutzerspezifisches Angebot von Informationsinhalten ist aber eine Identifizierung eines Nutzers, insbesondere von Alter, Geschlecht, gegebenenfalls einer Buchungsklasse oder einer Sitzposition im Beförderungsmittel notwendig. Denn auf diese Weise kann z.B. das Informationsangebote - insbesondere Film- oder Videodaten - an ein nutzerspezifisch (z.B. an ein Alter des Nutzers, etc.) angepasst und z.B. Alterfreigaben von Filmen, etc. berücksichtigt werden. Zusätzlich können Informationsinhalte an nutzerspezifische Vorlieben (z.B. nach dem Geschlecht, Alter, etc.) zusammengestellt und dem Nutzer angeboten werden.

Um nutzerspezifische Informationsinhalte über das Informationssystem in einem Beförderungsmittel, insbesondere Flugzeug, anbieten zu können, ist es denkbar, dass nutzerspezifische Daten (z.B. Alter, Geschlecht, Sitzposition im Beförderungsmittel, etc.) beispielsweise vor Nutzung des Informationsangebotes manuell über z.B. eine Bedieneinheit und/oder das mobile Endgerät eingegeben und dem Informationssystem zu Verfügung gestellt werden. Dies weist allerdings den Nachteil auf, dass bei einer manuellen Eingabe Daten fehlerhaft oder falsch (z.B. Unterscheidung zwischen Erwachsenen und Kind) eingegeben werden können und damit nur bedingt authentisch sind. Außerdem stellt eine manuelle Eingabe von derartigen Daten einen zusätzlichen Aufwand für den Nutzer dar, das Informationsangebot in einem Beförderungsmittel zu nutzen.

### Darstellung der Erfindung

Der Erfindung liegt daher die Aufgabe zugrunde, ein Verfahren zur Ausgabe von nutzerspezifischen Informationsangeboten in einem Beförderungsmittel anzugeben, bei welchem auf einfache Weise und ohne zusätzlichen Aufwand eine Identifizierung des Nutzers sowie eine nutzerspezifische Aufbereitung der Informationsinhalte ermöglicht wird.

Die Lösung dieser Aufgabe erfolgt, durch ein Verfahren der eingangs angeführten Art, bei welchem eine mobiles Endgeräte eines Nutzers bzw. Passagiers, über welches einen drahtlose Verbindung (über den Zugangspunkt) zum Informationssystem im Beförderungsmittel aufgebaut worden ist, mittels einer eindeutigen Kennung am Informationssystem identifiziert wird, und dass dann ein nutzerspezifischer Buchungsdatensatz mit Hilfe dieses mobilen Endgeräts erfasst wird. Der nutzerspezifische Buchungsdatensatz wird dann ausgewertet und an das Informationssystem übertragen. Vom Informationssystem wird dann eine Verknüpfung zwischen dem nutzerspezifischen Buchungsdatensatz und der eindeutigen Kennung des mobilen Endgeräts hergestellt und durch diese Verknüpfung eine Ausgabe von nutzerspezifischen Informationsinhalten gesteuert.

Der Hauptaspekt des erfindungsgemäßen Verfahrens besteht darin, dass auf einfache Weise und ohne zusätzlichen Aufwand - insbesondere für den Nutzer bzw. Passagier ein Buchungsdatensatz dem Informationssystem zur Verfügung gestellt wird, durch welchen eine authentische Identifikation des Nutzers und damit eine nutzerspezifische Steuerung von Informationsinhalten im Beförderungsmittel ermöglicht wird. Aufgrund der Eingabe des Buchungsdatensatzes können dann Informationsinhalte (z.B. Audiodaten, Videodaten, Filme, Werbung, etc.) z.B. alterspezifisch, geschlechtsspezifisch, gegebenenfalls angepasst an Interessen, etc. für den jeweiligen Nutzer aufbereitet und angeboten werden.

Durch eine Verknüpfung mit einer eindeutigen Kennung des jeweils genutzten mobilen Endgeräts (z.B. Mobiltelefon, Smartphone, Laptop, Tablet-PC, etc.) können außerdem Ressourcen wie z.B. eine Bandbreite für die Übertragung der Informationsinhalte besser an das Endgerät angepasst werden. Es besteht dabei auch die Möglichkeit, Ressourcen (z.B. Übertragungsbandbreite, etc.) beispielsweise nach einer Buchungsklasse und/oder einer Sitzposition des Nutzers im Beförderungsmittel zu priorisieren. Zusätzlich kann z.B. durch Ausnutzung einer Information über die Sitzpositionen der jeweiligen Nutzer und damit deren mobilen Endgeräten im Beförderungsmittel sehr einfach die Nutzung der drahtlosen Verbindung bzw. des dahinterliegenden Kommunikationssystems wie z.B. Wireless LAN, etc. optimiert werden.

Es ist vorteilhaft, wenn die Verknüpfung zwischen dem nutzerspezifischen Buchungsdatensatz und der eindeutigen Kennung des mobilen Endgeräts in einer zum Informationssystem gehörenden Datenbank hinterlegt wird. Damit werden dem Informationssystem auf einfache Weise Informationen über den jeweiligen Nutzer sowie das entsprechende mobile Endgeräte zur Verfügung gestellt. Die Informationen aus dem nutzerspezifischen Buchungsdatensatz und über das mobile Endgerät können dann z.B. während der gesamten Nutzung des Beförderungsmittels vom Informationssystem verwendet werden, um nutzerspezifische Informationsangebote zu erstellen bzw. dem Nutzer anzubieten. Die Verknüpfung bzw. die entsprechende Information kann aber auch dazu eingesetzt werden, um beispielsweise Ressourcen für eine Datenübertragung (z.B. Bandbreite, etc.) an z.B. das verwendete Endgerät anzupassen bzw. um über eine Information von räumlichen Positionen von mobilen Endgeräten im Beförderungmittel einen Frequenznutzung des Zugangspunktes bzw. eine Versorgung mit der drahtlosen Verbindung zu optimieren.

Idealerweise kann eine Ausgabe der nutzerspezifischen Informationsinhalte auf dem mobilen Endgerät und/oder einer nutzerspezifischen, dem Informationssystem zugehörigen Ausgabeeinheit ausgeführt werden. Wird das mobile Endgerät zu Ausgabe der Informationsinhalte genutzt, ist beispielsweise eine Anbringung vom zusätzlichen, mit dem Beförderungsmittel fix verbundenen Ausgabeeinheiten nicht mehr oder nur mehr in einem reduziertem Maß notwendig. Alternativ könnten die nutzerspezifischen Informationsinhalte beispielsweise in Flugzeugen auf einer zum Informationssystem gehörenden Ausgabeeinheit (z.B. sitzplatzspezifischer Bildschirm, etc.) ausgegebenen werden. Durch den nutzerspezifischen Buchungsdatensatz wird z.B. dem Informationssystem einen Sitzposition bzw. ein Sitzplatz des Nutzers zur Verfügung gestellt, wodurch auf der sitzplatzspezifischen Ausgabeeinheit das Informationsangebot sehr einfach nutzerspezifisch - z.B. gemäß Alter, Geschlecht, etc. - angepasst werden kann.

Eine bevorzugte Weiterbildung des erfindungsgemäßen Verfahrens sieht vor, dass eine Auswertung des nutzerspezifischen Buchungsdatensatz nach dem Erfassen direkt vom mobilen Endgerät durchgeführt wird. Auf dem mobilen Endgerät des Nutzer kann dazu beispielsweise eine Anwendung vorgesehen sein, von welcher der Buchungsdatensatz decodiert bzw. entschlüsselt wird und dann wesentliche nutzerspezifische Daten (z.B. Alter, Geschlecht, Sitzposition im Beförderungsmittel, Buchungsklasse, etc.) an das Informationssystem weitergeleitet werden. Dem Informationssystem werden dann für die Verknüpfung mit der eindeutigen Kennung des mobilen Endgeräts nur mehr für eine nutzerspezifische Anpassung der Informationsinhalte notwendige Daten zur Verfügung gestellt und damit eine in der Datenbank abzuspeichernde Datenmenge möglichst gering gehalten.

Alternativ ist es aber auch denkbar, dass die Auswertung des nutzerspezifischen Buchungsdatensatz nach einer Weiterleitung vom Informationssystem durchgeführt wird. Dabei wird der Buchungsdatensatz vom mobilen Endgerät nur erfasst und an das Informationssystem übertragen. Eine Decodierung bzw. Auswertung der im Buchungsdatensatz enthaltenen nutzerspezifischen Daten wird erst vom Informationssystem durchgeführt. Diese Vorgehensweise weist den Vorteil auf, dass auf dem mobilen Endgerät keine spezielle Anwendung zum Auswerten eines Buchungsdatensatzes vorgesehen sein muss. Von einem Nutzer muss der jeweilige Buchungsdatensatz nur mit dem mobilen Endgerät erfasst werden. Die Auswertung wird dann auf einfache und für den Nutzer bequeme Weise zentral von einer im Informationssystem vorgesehenen Anwendung durchgeführt.

Vorteilhafter Weise wird der nutzerspezifische Buchungsdatensatz als optoelektronisch lesbarer Code, insbesondere als Barcode, ausgeführt, da heutzutage bei vielen Beförderungsmitteln wie z.B. bei Flugzeugen oder bei Zügen die Benutzungsberechtigungsnachweis (z.B. Fahrkarten, Platzkarten, Flugticket, Boarding-Pass, etc.) mittlerweile mit zweidimensionalen optisch lesbaren Codes, insbesondere Barcode, versehen sind. Diese Barcodes sind beispielsweise dann sowohl auf einem Benutzungsberechtigungsnachweis in Papierform als auch bei einer elektronischen Form verfügbar und können damit auf einfache Weise für ein mobiles Endgerät zugänglich gemacht werden.

Dabei kann der nutzerspezifische Buchungsdatensatz beispielsweise nutzerspezifische Daten wie insbesondere Name, Alter, Geschlecht, Buchungsklasse und/oder Sitzposition im Beförderungsmittel umfassen. Im Flugverkehr wird beispielsweise der so genannte Bar-coded Boarding-Pass (BCBP) eingesetzt, bei welchem ein Barcode Bestandteil eines Boarding-Passes in Papierform wie in elektronischer Form ist und welcher von der so genannten Air Transport Association (IATA) international standardisiert ist. Bei einem BCBP sind beispielsweise der Name eines Fluggasts, implizit das Geschlecht/Alter (z.B. durch Mr., Mrs., Chd.), Flugnummer, Sitzplatz sowie eine Buchungsklasse in kodierter Form - d.h. als Barcode - hinterlegt und können damit sehr einfach für eine nutzerspezifische Ausgabe von Informationsinhalten genutzt werden.

Bei einer bevorzugten Fortbildung des erfindungsgemäßen Verfahrens wird der nutzerspezifische Buchungsdatensatz vom mobilen Endgerät mit Hilfe eines optischen Sensors, insbesondere einer Kamera, erfasst. Da heutzutage viele mobile Endgeräte wie z.B. Mobiltelefone, Smartphones, Tablet-PCs eine optischen Sensor, insbesondere eine digitale Kamera, aufweisen, kann auf sehr einfache Weise der Buchungsdatensatz - insbesondere ein optisch oder optoelektronisch lesbarer Code - beispielsweise von einem Benutzungsberechtigungsnachweis in Papierform wie z.B. einem Boarding-Pass mittels eines mobilen Endgeräts eingelesen werden.

Alternativ ist es auch von Vorteil, wenn der nutzerspezifische Buchungsdatensatz an das mobile Endgeräte von einem Buchungs- und/oder Reservierungssystem weitergeleitet wird. Bei z.B. elektronische verfügbaren Benutzungsberechtigungsnachweisen für ein Beförderungsmittel (z.B. elektronischer Boarding-Pass bei einem Flugzeug, elektronische Platzkarte für eine Zug, etc.), welche eine codierten Buchungsdatensatz aufweisen, kann dieser auf einfache Weise z.B. bei der Buchung oder bei der Platzreservierung oder beim so genannten Check-In via Internet an ein mobiles Endgerät (z.B. Mobiltelefon, Smartphone) weitergeleitet werden. Der Buchungsdatensatz ist dann direkt am mobilen Endgerät verfügbar und muss vom Nutzer nicht mehr z.B. mit Hilfe eines optischen Sensors erfasst werden.

Zweckmäßiger Weise wird als eindeutige Kennung für das mobile Endgerät insbesondere eine so genannte IP-Adresse, eine so genannte MAC-Adresse und/oder ein endgerätspezifischer, statischer oder dynamischer Schlüssel verwendet. Beim Aufbau der drahtlosen Verbindung des mobilen Endgeräts zum Informationssystem kann beispielsweise für die Datenübertragung eine so genannte IP-Adresse vergeben werden. Eine IP-Adresse ist eine auf dem Internet Protokoll (IP) basierende Adresse eines Geräts bzw. mobilen Endgeräts in einem Kommunikationssystem. Die IP-Adresse wird beim Verbindungsaufbau einem Gerät zugewiesen und macht das Geräte auf diese Weise adressierbar und damit erreichbar. Eine MAC-Adresse ist eine Hardwareadresse, welche zur eindeutigen Identifizierung eines Geräts wie einem mobilen Endgeräts in einem Kommunikationssystem verwendet wird.

Alternativ zu IP- oder MAC-Adresse kann als eindeutige Kennung für das mobile Endgerät auf ein von einem Hersteller vergebener eindeutiger Schlüssel (z.B. Seriennummer, etc.), welche beispielsweise im Endgerät gespeichert ist, eingesetzt werden, um das mobile Endgerät am Informationssystem zu identifizieren. Es können aber auch dynamisch erzeugte eindeutige Schlüssel als eindeutige Kennung für die Identifizierung des mobilen Endgeräts verwendet werden - wie z.B. mittels einer Anwendung ein vom Endgerät beim Verbindungsaufbau erzeugter Schlüssel oder ein vom Informationssystem erzeugter, eindeutiger Schlüssel.

Bei einer weiteren Ausgestaltung des erfindungsgemäßen Verfahrens wird für einen Überwachung von im Beförderungsmittel genutzten mobilen Endgeräten zumindest eine zentrale Kontrollausgabeeinheit verwendet. Dabei kann die zumindest eine Kontrollausgabeeinheit entweder fest mit dem Informationssystem verbunden oder als mobile Einheit ausgeführt sein, von welcher über den Zugangspunkt eine drahtlose Verbindung zum Informationssystem aufgebaut wird. Über die Kontrollausgabeeinheit wird z.B. einem Personal des Beförderungsmittels auf einfache Weise zur Kenntnis gebracht, an welchen Sitzpositionen mobile Endgeräte genutzt werden, um beispielsweise in einem Flugzeug bei einem Landanflug auf eine Abschaltung des Geräts hinweisen zu können. Zusätzlich kann die Kontrollausgabeeinheit beispielsweise bei Verkauf von Waren (DutyFree-Güter, Getränke, Nahrungsmittel, etc.), welche z.B. über das Informationssystem und als Informationsinhalt einem Nutzer bzw. Fahrgast angeboten werden können, zur einfacheren Auslieferung von bestellten Waren einsetzt werden.

### Kurzbeschreibung der Zeichnung

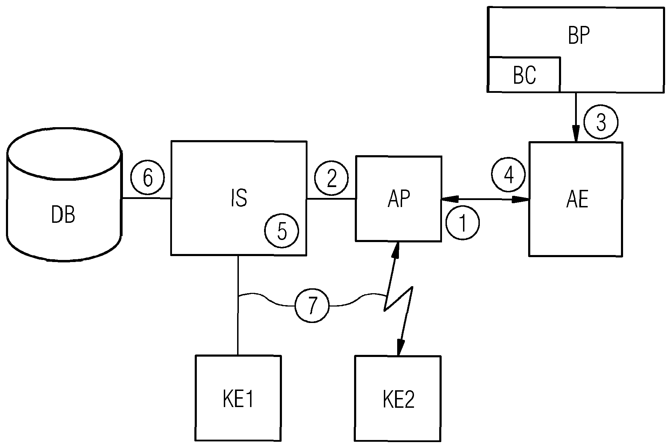

Die Erfindung wird nachfolgend schematisch in beispielhafter Weise anhand der beigefügten Figur 1 erläutert. Figur 1 zeigt dabei beispielhaft den Ablauf des erfindungsgemäßen Verfahrens bei einem Einsatz in einem Informationssystem in einem Flugzeug.

### Ausführung der Erfindung

Figur 1 zeigt in schematischer Weise ein beispielhaftes Informationssystem IS, welches in einem Beförderungsmittel wie z.B. einem Flugzeug angebracht ist. Das Informationssystem IS kann beispielsweise ein so genanntes In-Flight-Entertainment- oder Bordunterhaltungssystem sein. Das Informationssystem IS ist mit einer zum Informationssystem IS gehörenden Datenbank DB verbunden, in welche beispielsweise Informationsinhalte, aber auch nutzerspezifische Daten (z.B. Endgerätekennungen, etc.) abgespeichert werden können. Weiterhin ist das Informationssystem IS mit einem Zugangspunkt AP - einem so genannten Access Point AP - verbunden, über welchen von im Beförderungsmittel bzw. im Flugzeug befindlichen, mobilen Endgeräten AE wie z.B. Mobiltelefone, Smartphones, Laptops, Tablet-PCs, etc. eine drahtlose Verbindung zum Informationssystem IS in einem ersten Verfahrensschritt 1 aufgebaut werden kann.

Für die drahtlose Verbindung zwischen einem mobilen Endgerät AE und dem Zugangspunkt AP bzw. dem Informationssystem IS können beispielsweise Funkkommunikationssysteme wie z.B. Wireless LAN, GSM, UMTS oder das so genannte Next Generation Mobile Networks bzw. 4G verwendet werden. Das mobile Endgerät AE wird dabei im ersten Verfahrensschritt 1 mit dem Zugangspunkt AP drahtlos verbunden und kann damit mit dem Informationssystem IS kommunizieren bzw. Daten austauschen. In einem zweiten Verfahrensschritt 2 wird dann das mobile Endgerät AE mittels einer eindeutigen Kennung am Informationssystem IS identifiziert. Zur Identifikation bzw. als eindeutige Kennung können beispielsweise eine so genannte IP-Adresse, eine so genannte MAC-Adresse oder ein eindeutiger, statischer, z.B. vom Hersteller des mobilen Endgeräts AE vergebener Schlüssel (z.B. Seriennummer) verwendet werden. Es ist aber auch denkbar, dass für den zweiten Verfahrensschritt 2 vom mobilen Endgerät AE - z.B. mittels einer Anwendung/Applikation - dynamisch ein eindeutiger Schlüssel bzw. eine eindeutige Kennung für die Identifikation am Informationssystem IS generiert wird. Alternativ kann ein derartiger, dynamischer Schlüssel auch vom Informationssystem IS erzeugt werden und z.B. an das Endgeräte AE übertragen und für eine Wiedererkennung genutzt werden.

In einem dritten Verfahrensschritt 3 wird dann vom mobilen Endgerät AE ein Buchungsdatensatz BC erfasst, welcher auf einem Benutzungsberechtigungsnachweis BP für eine Nutzung des Beförderungsmittels angebracht ist - wie z.B. ein Barcode BC bei einem so genannten Bar-coded Boarding-Pass (BCBP). Zum Erfassen des Buchungsdatensatzes BC kann beispielsweise ein optischer Sensor wie z.B. eine digitale Kamera, welche heutzutage üblicherweise in vielen mobilen Endgeräten AE angebracht ist, verwendet werden bzw. mit Hilfe der Kamera und einer speziellen Anwendung am mobilen Endgerät AE eingescannt werden. Der Buchungsdatensatz BC kann allerdings beispielsweise bei einem elektronischen Boarding-Pass BP bereits vorbei z.B. bei einer Sitzplatzreservierung vor dem Flug von einem Reservierung- und/oder Buchungssystem an das mobile Endgerät AE weitergeleitet werden und steht diesem dann bereits vor einem Flug zur Verfügung.

In einem vierten Verfahrensschritt 4 wird dann Buchungsdatensatz BC dann ausgewertet. Eine Auswertung des Buchungsdatensatzes, in welchen bei einem Bar-coded Boarding-Pass BP beispielsweise Name, implizit Alter und Geschlecht des Nutzers bzw. Passagiers, Flugnummer, Sitzplatz und Buchungsklasse, etc. enthalten sind, kann entweder durch eine Anwendung/Applikation auf dem mobilen Endgerät AE oder durch das Informationssystem IS erfolgen. Wird der Buchungsdatensatz BC vom mobilen Endgerät AE decodiert, so werden nach der Decodierung die decodierten, nutzerspezifischen Daten als Datensatz an das Informationssystem IS übertragen. Wird die Decodierung des Buchungsdatensatzes BC am Informationssystem IS durchgeführt, so wird der kodierte Buchungsdatensatz - z.B. der vom mobilen Endgerät AE erfasst Barcode beispielsweise als Bild - an das Informationssystem IS weitergeleitet. Vom Informationssystem IS wird dann der Buchungsdatensatz BC in einen Datensatz von nutzerspezifischen Daten umgewandelt.

In einem fünften Verfahrensschritt 5 wird am Informationssystem IS eine Verknüpfung zwischen dem ausgewerteten bzw. decodierten Buchungsdatensatz BC - d.h. dem Datensatz von nutzerspezifischen Daten (z.B. Name, Alter, Geschlecht, Sitzplatz, etc.) und der eindeutigen Kennung des mobilen Endgeräts AE diese Nutzer hergestellt. In einem sechsten Verfahrensschritt 6 wird dann diese Verknüpfung zwischen decodiertem Buchungsdatensatz BC und der eindeutigen Kennung des mobilen Endgeräts AE in der zum Informationssystem IS gehörenden Datenbank DB hinterlegt und abgespeichert. Diese Verknüpfung kann nun für eine Steuerung der Ausgabe von Informationsinhalten (z.B. Audiodaten, Videodaten, Filme, Werbung, etc.) durch das Informationssystem IS herangezogen werden.

Angebotene Informationsinhalte können auf diese einfache Weise alterspezifisch, geschlechtsspezifisch, gemäß der Sitzposition oder Buchungsklasse im Beförderungsmittel bzw. Flugzeug angepasst werden. So können beispielsweise Alterfreigaben bei Filmangeboten berücksichtigt werden oder das Informationsangebot entsprechend bekannter geschlechtsspezifischer Vorlieben nutzerspezifisch aufbereitet werden. Zusätzlich bietet sich die Möglichkeit, eine Priorisierung von Ressourcen (z.B. Bandbreite, etc.) entsprechend der Buchungsklasse und/oder Sitzposition im Beförderungsmittel durchzuführen, oder Angebote an das entsprechende mobile Endgerät anzupassen. Weiterhin kann auch die Frequenznutzung des für die drahtlose Verbindung verwendeten Kommunikationssystems (z.B. Wireless LAN, etc.) durch Verwendung der Information der Sitzpositionen, an welchen Informationsinhalte über mobile Endgeräte AE genutzt werden, optimiert werden. Es ist auch denkbar, dass aufgrund der Kenntnis von Nutzer, Sitzposition des Nutzers, etc. z.B. vor Abflug gebuchte und bezahlte Informationsinhalte oder als Promotion gebotenen Informationsinhalte für den jeweiligen Nutzer speziell aktiviert werden.

Eine Ausgabe der nutzerspezifischen Informationsinhalte kann beispielsweise direkt am mobilen Endgerät AE des jeweiligen Nutzers erfolgen. Es ist aber auch denkbar, dass - aufgrund der bekannten Sitzposition des Nutzer - z.B. in einem Flugzeug auch eine sitzplatzspezifische, zum Informationssystem IS gehörende Ausgabeeinheit für die Ausgabe der nutzerspezifischen Informationsinhalte eingesetzt wird - insbesondere wenn beispielsweise das mobile Endgeräte AE des Nutzer für eine Ausgabe nur bedingt geeignet ist.

In einem optionalen, siebenten Verfahrensschritt 7 besteht die Möglichkeit, dass für einen Überwachung von im Beförderungsmittel genutzten mobilen Endgeräten AE zumindest eine zentrale Kontrollausgabeeinheit KE1, KE2 eingesetzt wird. In Figur 1 sind beispielhaft zwei Kontrollausgabeeinheiten KE1, KE2 dargestellt, wobei eine erste Kontrollausgabeeinheit KE1 fest verdrahtet mit dem Informationssystem IS verbunden ist. Eine zweite Kontrolleinheit KE2 ist über eine drahtlose Verbindung über den Zugangspunkt AP an das Informationssystem IS angebunden. Die Kontrollausgabeeinheiten KE1, KE2 können beispielsweise vom Personal eines Fluges, etc. dazu genutzt werden, Kenntnis über z.B. Namen und/oder Sitzpositionen von Passagieren zu erhalten, von welchen mobile Endgeräte AE während des Fluges benutzt werden. Beispielsweise bei einem Landeanflug können diese Passagiere dann auf eine Abschaltung des mobilen Endgeräts AE aufmerksam gemacht werden. Zusätzlich können die Kontrollausgabeeinheiten KE1, KE2 auch für z.B. eine Auslieferung von Waren, Getränken, etc. bei einem Bordverkauf verwendet werden, da beispielsweise ein bestellender Passagier auf der Kontrollausgabeeinheit KE1, KE2 sichtbar gemacht werden kann.

Weiterhin ist es auch möglich, das erfindungsgemäße Verfahren mit einem Buchungs- und/oder Reservierungssystem eines Betreibers (z.B. Fluglinie, etc.) des Beförderungsmittel zu kombinieren. Das kann beispielsweise durch einen so genannten Online-Zugriff erfolgen, sofern das Beförderungsmittel, insbesondere das Flugzeug z.B. über eine Satellitenkommunikationseinrichtung verfügt, oder offline - d.h. die entsprechende Daten der gebuchten Passagiere werden vor einem Start des Flugzeugs z.B. auf das Informationssystem IS übertragen. Bei einer Kombination mit einem Buchungs- und/oder Reservierungssystem wären dann zusätzliche Anwendungen für Nutzer bzw. Passagiere möglich - wie z.B. eine Fortsetzung eines (gebuchten) Informationsinhalts (z.B. Films, etc.), welcher aufgrund einer zu kurzen Flugzeit nicht zu Ende gesehen werden konnte.

## Patentansprüche

1. Verfahren zur Ausgabe von nutzerspezifischen Informationsinhalten in einem Beförderungsmittel, insbesondere Flugzeug, in welchem ein Informationssystem (IS) sowie ein Zugangspunkt (AP) für mobile Endgeräte (AE) zum Informationssystem (IS) vorgesehen sind,
wobei von einem im Beförderungsmittel befindlichen mobilen Endgerät (AE) über den Zugangspunkt (AP) eine drahtlose Verbindung zum Informationssystem (IS) aufgebaut wird (1),
wobei das mobile Endgerät (AE) mittels einer eindeutigen Kennung am Informationssystem (IS) identifiziert wird (2),
wobei ein nutzerspezifischer Datensatz (BC) vom mobilen Endgerät (AE) erfasst wird (3), dass der nutzerspezifische Datensatz (BC) ausgewertet und an das Informationssystem (IS) übertragen wird (4),
wobei dann vom Informationssystem (IS) eine Verknüpfung zwischen dem nutzerspezifischen Datensatz (BC) und der eindeutigen Kennung des mobilen Endgeräts (AE) hergestellt wird (5), und
wobei diese Verknüpfung zur Steuerung der Ausgabe der nutzerspezifischen Informationsinhalte verwendet wird,
**dadurch gekennzeichnet,**
**dass** der nutzerspezifische Datensatz (BC) ein nutzerspezifischer Buchungsdatensatz ist und
**dass** auf Grundlage der Verknüpfung zwischen der Kennung und dem nutzerspezifischen Buchungsdatensatz und aufgrund einer räumlichen Position eines Endgeräts in dem Beförderungsmittel eine Frequenznutzung des Zugangspunkts optimiert wird.

2. Verfahren nach Anspruch 1, **dadurch gekennzeichnet,**
**dass** die Verknüpfung zwischen dem nutzerspezifischen Buchungsdatensatz (BC) und der eindeutigen Kennung des mobilen Endgerats (AE) in einer zum Informationssystem (IS) gehorenden Datenbank (DB) hinterlegt wird (6).

3. Verfahren nach einem der Ansprüche 1 bis 2, **dadurch**
**gekennzeichnet, dass** nutzerspezifischen Informationsinhalte auf dem mobilen Endgerat (AE) und/oder einer nutzerspezifischen, dem Informationssystem (IS) zugehorigen Ausgabeeinheit ausgegeben werden.

4. Verfahren nach einem der Ansprüche 1 bis 3, **dadurch gekennzeichnet, dass** eine Auswertung des nutzerspezifischen Buchungsdatensatz (BC) nach dem Erfassen direkt vom mobilen Endgerät durchgeführt wird (4).

5. Verfahren nach einem der Ansprüche 1 bis 3, **dadurch gekennzeichnet, dass** eine Auswertung des nutzerspezifischen Buchungsdatensatz (BC) nach einer Weiterleitung vom Informationssystem durchgeführt wird (4).

6. Verfahren nach einem der Ansprüche 1 bis 5, **dadurch gekennzeichnet, dass** der nutzerspezifische Buchungsdatensatz (BC) als optoelektronisch lesbarer Code, insbesondere als Barcode, ausgeführt wird.

7. Verfahren nach einem der Ansprüche 1 bis 6, **dadurch gekennzeichnet, dass** im nutzerspezifischen Buchungsdatensatz (BC) insbesondere Name, Alter, Geschlecht, Buchungsklasse und/oder Sitzposition im Beförderungsmittel hinterlegt werden

8. Verfahren nach einem der Ansprüche 1 bis 7, **dadurch gekennzeichnet, dass** der nutzerspezifische Buchungsdatensatz (BC) vom mobilen Endgerat (AE) mit Hilfe eines optischen Sensors, insbesondere einer Kamera, erfasst wird (3).

9. Verfahren nach einem der Ansprüche 1 bis 7, **dadurch gekennzeichnet, dass** der nutzerspezifische Buchungsdatensatzb (BC) an das mobile Endgerät (AE) von einem Buchungs- und/oder Reservierungssystem weitergeleitet wird (3).

10. Verfahren nach einem der Ansprüche 1 bis 9, **dadurch gekennzeichnet, dass** als eindeutige Kennung für das mobile Endgerät (AE) insbesondere eine so genannte IP-Adresse, eine so genannte MAC-Adresse und/oder einer endgerätspezifischer, statische oder dynamischer Schlüssel verwendet wird (2).

11. Verfahren nach einem der Ansprüche 1 bis 10, **dadurch gekennzeichnet, dass** für eine Überwachung von im Beförderungsmittel genutzten mobilen Endgeräten (AE) zumindest eine zentrale Kontrollausgabeeinheit (KE1, KE2) verwendet wird (7).

12. Verfahren nach Anspruch11, **dadurch gekennzeichnet,**
**dass** die zumindest eine Kontrollausgabeeinheit (KE1) fest mit dem Informationssystem (IS) verbunden wird (7).

13. Verfahren nach Anspruch 11, daduch gekennzeichnet,
dass die zumindest einen Kontrollausgabeeinheit (KE2) als mobile Einheit ausgeführt wird, von welcher über den Zugangspunkt (AP) eine drahtlose Verbindung zum Informationssystem (IS) aufgebaut wird (7).
